# EUROPEAN PATENT APPLICATION

(11) **EP 0 551 917 A1**
(43) Date of publication of application: **21.07.1993**
(21) Application number: 93100584.7
(22) Date of filing: 15.01.1993
(51) Int. Cl.: B29C 55/00, B29C 35/02, B29C 67/24

(54) **A method for molding a composite material reinforced by a liquid crystal resin**

(30) Priority: 17.01.1992 JP 6332/92
(71) Applicant: Mazda Motor Corporation, Aki-gun Hiroshima-ken (JP)
(72) Inventor: Toh, Kazuhisa, Kure-shi, Hiroshima-ken (JP); Hara, Masao, Higashi hiroshima-shi, Hiroshima-ken (JP); Moriwaki, Kenji, Fuchu-cho, Aki-gun, Hiroshima-ken (JP); Adachi, Daisaburou, Hiroshima-shi, Hiroshima-ken (JP)
(74) Representative: Müller-Boré & Partner Patentanwälte

(57) **Abstract**

When the composite material is heated at a slow heating rate to the temperature operable for the molding process, the mold product shows a disappearance of a minor part or a major part of a fiber structure of the liquid crystal resin. In view of the above fact, the present invention is to provide a method for molding a composite material comprising a matrix resin of a thermal plastic resin and a liquid crystal resin which has a liquid crystal transition temperature higher than the minimum moldable temperature of said thermal plastic resin and which is formed into a fiber structure as a reinforcing material, wherein said composite material is heated up at a heating rate higher than 80°C/min to a molding temperature range from more than the minimum moldable temperature to lower than the liquid crystal transition temperature and then is subjected to molding while the heat retaining temperature is keeping.

## Description

The present invention relates to an improved method for molding a composite resin product reinforced by a liquid crystal resin of a fiber structure dispersed in a matrix resin.

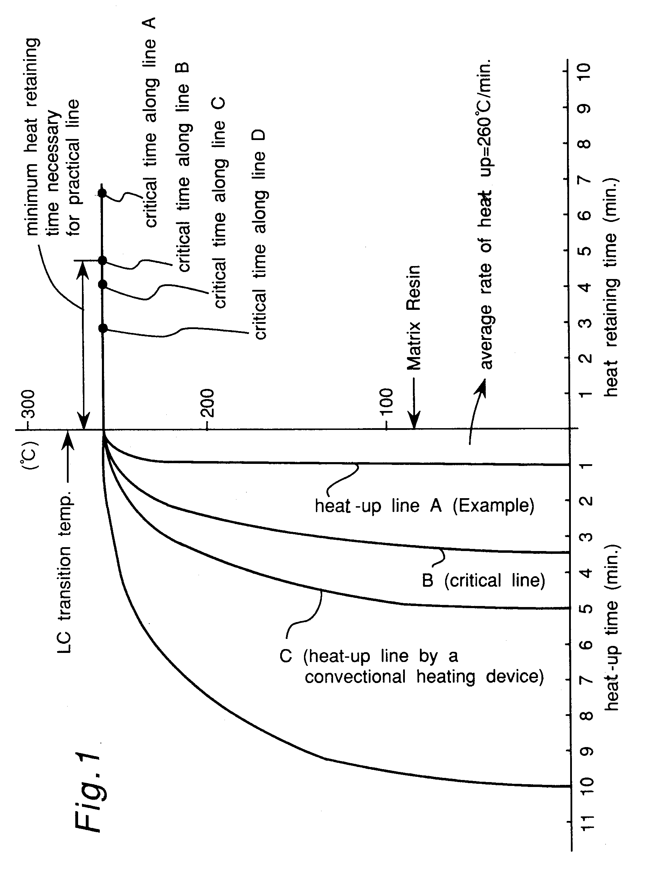

In a recent year, much attention has been paid to a recycle of a fiber reinforced resin (FRP) having a reinforcing material such as a glass fiber dispersed in a matrix resin. In place of the glass fiber, a liquid crystal resin of a fiber structure has been proposed as a reinforcing material in order to obtain a remoldable product having a high extension strength. As shown in Fig. 1, a composite material comprising a matrix resin of a thermal plastic resin mixed with a liquid crystal resin of a given content is extruded into a given form at a temperature higher than the minimum moldable temperature of the plastic resin and lower than the liquid crystal transition temperature to obtain a composite material having a liquid crystal resin of a fiber structure dispersed in the matrix resin. If necessary, the composite material is further extruded into a film material, which is press-molded into a product of a given shape having a high extension strength.

In a process to mold such a composite material, for example, under pressing, the composite material is heated up to a temperature range from more than the minimum moldable temperature (the temperature of capable of molding the matrix resin) to less than the transition temperature of the liquid crystal resin and then is kept at the heat retaining temperature for a time period necessary for the pretreatment before the molding process. Even when the composite material is heated at the moldable temperature range, there occurs the following impairment with the product prepared from the composite material. Basically, the mold product from the composite material should have a liquid crystal resin of a fiber structure dispersed uniformly in the matrix resin. However, when the composite material is heated up at a slow heating rate to the moldable temperature, the resulting mold product shows a disappearance of a minor part or a major part of a fiber structure of the liquid crystal resin. As a result, the mold product has no desired structural strength.

In view of the above fact, the object of the present invention is to clarify the reason why such disappearance of liquid crystal resin fiber occurs and is to provide a method for molding the composite material without the above problem.

As a result of the various experiments, there has been found that the fiber structure of the liquid crystal resin in the mold product decreases with an increase in a time period at a pretreatment step, during which the mold product is kept at the moldable temperature and thus the decreasing rate of the fiber structure directly depends on a heating rate by which the composite material is heated to the moldable temperature. Based on this finding, according to the aspect of the present invention, there is provided a method for molding a composite material comprising a matrix resin of a thermal plastic resin and a liquid crystal resin which has a liquid crystal transition temperature higher than the minimum moldable temperature of said thermal plastic resin and which is formed into a fiber structure as a reinforcing material, wherein said composite material is heated up at a heating rate higher than 80°C/min to a molding temperature range from more than the minimum moldable temperature to lower than the liquid crystal transition temperature and then is subjected to molding while the heat retaining temperature is keeping.

As shown in Fig. 1, when the composite material is heated to the moldable temperature for the molding process at a heating rate higher than 80°C/min which is denoted as a critical heating rate line B, the mold product from the composite material does not show any impairment in the fiber structure of the liquid crystal resin when the composite material is kept at the molding temperature for a time period necessary for the practical pretreatment. Therefore, the resulting mold product has a fiber structure of the liquid crystal resin completely dispersed in the matrix resin and shows a high structural strength. As a heating rate is higher, it is possible to keep the composite material at the pretreatment temperature for a longer time period without any impairment in the fiber structure of the liquid crystal resin in the mold product. On the other hand, as a heating rate is lower (C line to D line), it is necessary to keep the composite material at the pretreatment temperature for a shorter time period (C point to D point) in order to avoid any impairment in the fiber structure of the liquid crystal resin in the resulting mold product. When the heating rate is lower than the critical heating rate, that is, the composite material to be press-molded is placed under the heat retaining condition for a normal preparation time required to the practical step, there occurs a partial disappearance of the fiber structure of the liquid crystal resin, which results in not to obtain a mold product having the fiber structure dispersed uniformly in the matrix resin.

Accordingly, it is preferable that the heat retaining time should be set as short as possible. That is, 1) the higher the heat retaining temperature becomes, 2) the larger the amount of heat the composite material receives on heating up, 3) the smaller the drawing ratio of the composite material to be molded becomes on extruding, 4) the smaller the content of the liquid crystal resin in the composite material to be molded is and/or 5) the lower the glass transition temperature Tg of the matrix resin in the composite material to be molded is, the shorter the critical time for retaining the composite material before molding is set.

The composite material according to the present invention may comprise any kind of thermal plastic resin such as polypropylene, polyethylene, polystyrene, ABS, polyamide(nylon), polycarbonate, polybutylene terephthalate, polyethylene terephthalate, modified PPE (polyphenylene ether), polyphenylene sulfide, polyether sulfone, and their modifications or their blends (polymer alloy).

On the other hand, the composite material according to the present invention may comprise any kind of liquid crystal resin which has a liquid crystal transition temperature higher, preferably by 20°C or more, than the moldable temperature of the matrix resin and which has no more limitation. A preferable material is liquid crystal polyester of a thermal plastic type and liquid crystal polyesteramide of a thermal plastic type which are commercially available as BECTRA, ECONOL and ZAIDA.

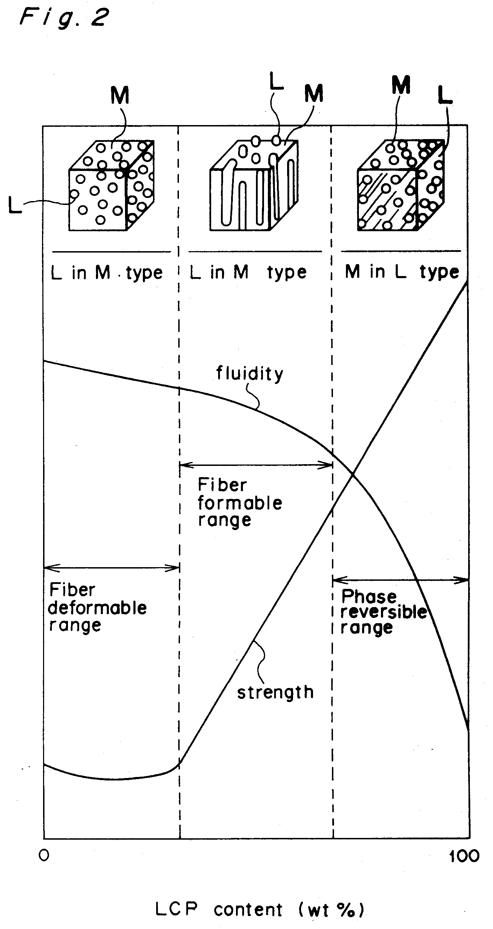

The content of the liquid crystal resin is adjusted to be in a concentration range which accomplishes the fiber structure of the liquid crystal resin and which is less than the phase reversing concentration as shown in Fig. 2. For example, the content of the liquid crystal resin may be 40 to 80 weight % for polyamide resin as a matrix resin; 30 to 75 weight % for ABS (acryl butadiene styrene copolymer) as a matrix resin; 3 to 70 weight % for polycarbonate (PC)/ABS as a matrix resin; 3 to 60 weight % for polyphenylene oxide/nylon as a matrix resin; 2 to 70 weight % for polypropylene as a matrix resin; and 3 to 70 weight % for polycarbonate as a matrix resin.

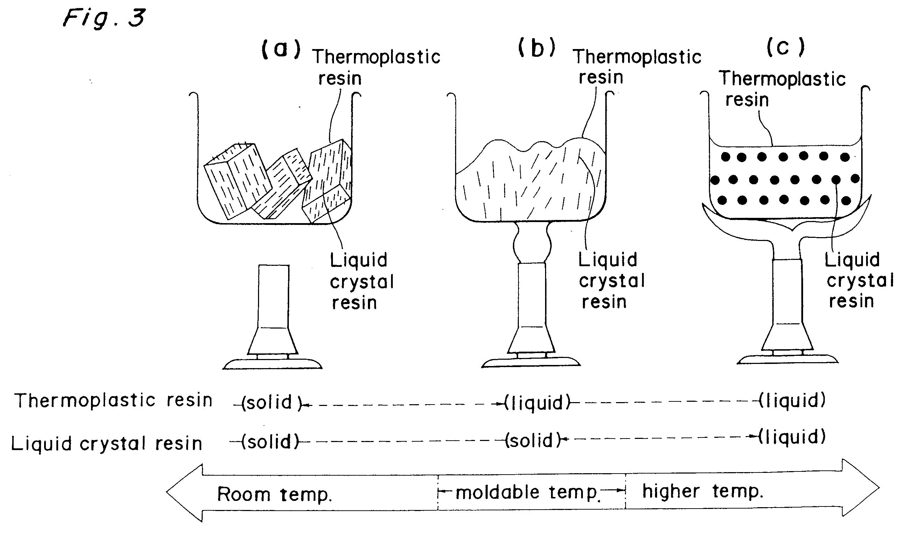

When the composite material composition capable of forming a fiber structure is heated to a temperature which is higher than the minimum moldable temperature of the matrix resin and is higher than the liquid crystal transition temperature, that is, a material adjusting temperature as shown in Fig. 3 and then is extruded at the temperature, the liquid crystal resin is formed into a fiber structure in the matrix resin. The fiber structure is oriented in an extrusion direction. The extruded material of a film form is then cut into a given size. The cut pieces are integrated to each other and are used as a starting material for a mold product. It is preferable to extrude the composite material at a shear rate of 3x10² to 10⁵ sec⁻¹ . This shear rate permits the following drawing process to achieve a fiber structure of the liquid crystal resin capable of improving the tensile strength. It is noted that the extruded product may be in a strand state.

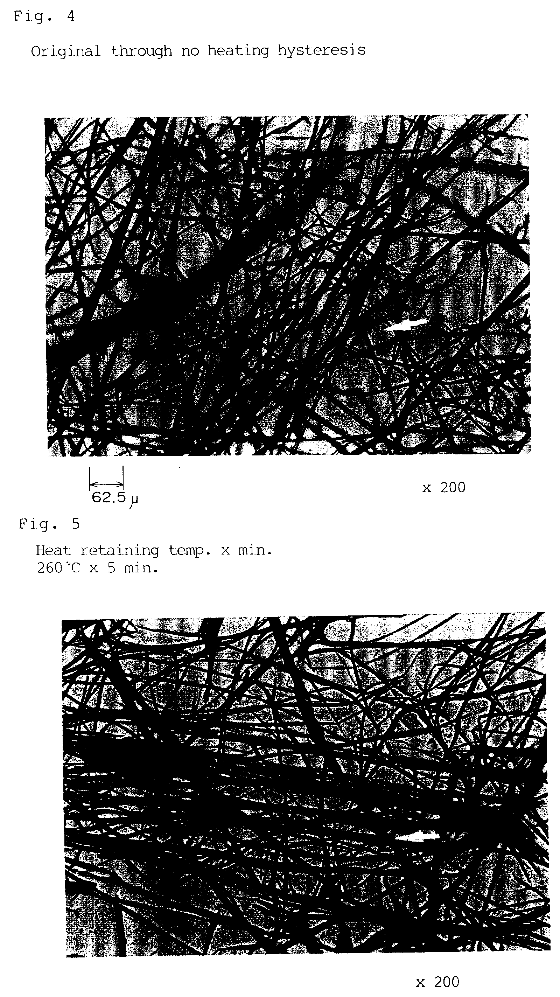

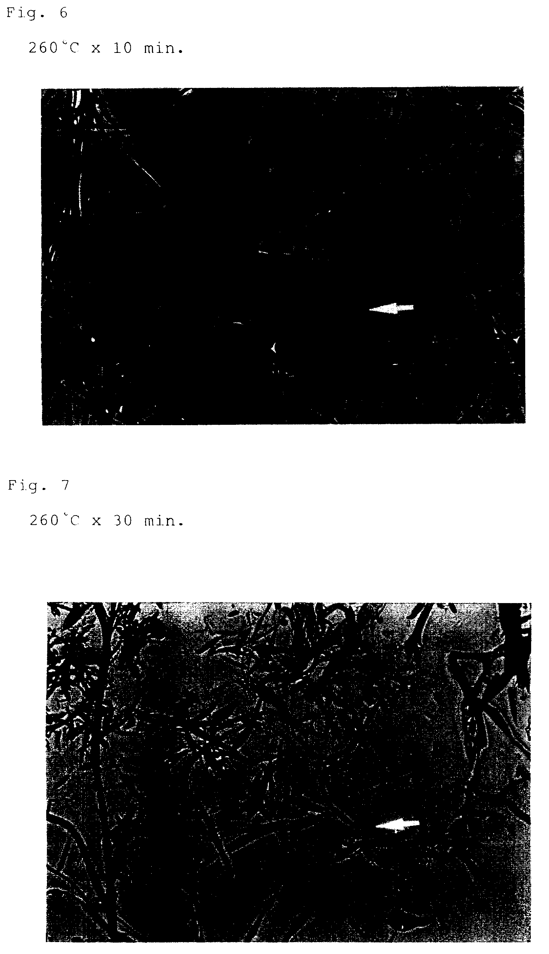

These and other objects and features of the present invention will become clear from the following description taken in conjunction with the preferred embodiments thereof with reference to the accompanying drawings throughout which like parts are designated by like reference numerals, and in which: Fig. 1 is a graph showing a relationship between a heating rate by which the composite material is heated up to the moldable temperature and the heat retaining time during which the composite material is kept at the resin temperature without causing an impairment in the fiber structure of the liquid crystal resin in the mold product; Fig. 3 is a drawing showing a state variation depending on the temperature of the matrix resin and the liquid crystal resin of the composite material; Fig.2 is a graph showing an effect of the content of the liquid crystal resin on the state variation of the composite material; Fig. 4 is an optical microscopic photograph showing the fiber structure of the liquid crystal resin in the matrix resin (the first stage) when the composite material is heated as described in the Example 1; Fig. 5 is an optical microscopic photograph showing the fiber structure of the liquid crystal resin in the matrix resin after 5 minutes from the state of Fig.4; Fig. 6 is an optical microscopic photograph showing the fiber structure of the liquid crystal resin in the matrix resin after 10 minutes from the state of Fig.4; Fig. 7 is an optical microscopic photograph showing the fiber structure of the liquid crystal resin in the matrix resin after 30 minutes from the state of Fig.4.

The used matrix resin is polystyrene (HH105 made by MITSUBISHI KASEI POLYTECHNIC Co.,Ltd.). The used liquid crystal resin is aromatic polyester (BECTRA A950 made by POLYPLASTIC KK ;melting point (liquid crystal transition temperature); 280°C). The composite material is prepared from a mixture of 60 weight % of polystyrene and 40 weight % of aromatic polyester and then extruded into a film form with a biaxial extruder (type ST-30-S2-36L made by PLASTIC TECHNOLOGY Co.,Ltd.) at the following extrusion condition: screw diameter, 36mm; resin temperature, 270°C; screw rotation number, 100rpm; die size, 100x2mm; and shear rate, 1700sec⁻¹. The extruded material is further drawn with a drawing apparatus made by the inventor's company at a drawing ratio of 13 and then cut into a test piece of 1mm x 1mm.

The test piece is placed on a cover glass (24 x 24 x 0.15mm) and is heated at a given temperature for a given time period and then is observed in connection with a variation in the fiber structure of the liquid crystal resin through an optical microscope.

The test piece is heated up to the resin temperature of 260°C at 90 seconds and is subjected to optical microscopy. The fiber structure of the liquid crystal resin satisfactorily exists in the matrix resin when the test piece is kept at the resin temperature of 260°C for 0 second (Fig. 4) and for 5 minutes (Fig. 5). The test piece kept at the resin temperature of 260°C for 10 minutes shows a disappearance of fine fiber structure and generates a rough fiber in the matrix resin as shown in Fig. 6. The test piece kept at the resin temperature of 260°C for 30 minutes shows that the rough fibers are cut into smaller pieces as shown in Fig. 7.

The test pieces are heated to the resin temperature of 260°C at various stepwise heating rates of 260°C/min to 26°C/min and subjected to the optical microscopy in order to observe the critical point for retaining the good fiber structure in the matrix resin. As shown in Fig. 1, the heating rate of 260°C/min causes the fiber structure of the liquid crystal resin in the matrix resin to start a disappearance after the keeping time of 7 minutes at the resin temperature. The heating rate of 80°C/min causes the fiber structure of the liquid crystal resin in the matrix resin to start a disappearance after the keeping time of 5 minutes at the resin temperature. The heating rates of 52°C/min and 26°C/min cause the fiber structure of the liquid crystal resin in the matrix resin to start a disappearance after the keeping time of 4 minutes 20 seconds and 3 minutes at the resin temperature, respectively. Therefore, in the cases of 52°C/min and 26°C/min, the allowable heat retaining time is shorter than that of the practical case, which requires 5 minutes as a pretreatment time period. Therefore, it is clear that the heating rate of 80°C/min is a critical heat-up rate in view of the practical procedure. In Fig.1, line A denotes the heat-up line of 260°C/min., line B denotes the heat-up line of 80°C/min., line C denotes the heat-up line of 52°C/min., line D denotes the heat-up line of 26°C/min.

It is further found that when the composite material is heated at a constant heating rate to the resin temperature, the allowable heat retaining time tends to be made longer as the composite material includes a larger amount of liquid crystal resin; as the drawing ratio is larger; or as the matrix resin has a higher Tg (glass transition temperature).

The above description is directed to the heat retaining time in case of the press-molding process. The scope of the present invention can be directed to a case where the composite material is heated in a barrel and is kept in the barrel in case of an injection molding process or a case where the composite material is heated in case of a filament winding mold process.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

1. A method for molding a composite material comprising a matrix resin of a thermal plastic resin and a liquid crystal resin which has a liquid crystal transition temperature higher than the minimum moldable temperature of said thermal plastic resin and which is formed into a fiber structure as a reinforcing material, wherein said composite material is heated up at a heating rate higher than 80°C/min to a temperature range for molding which is more than the minimum moldable temperature and is lower than the liquid crystal transition temperature and is subjected to molding while the heat retaining temperature is keeping.

2. The method for molding a composite material according to claim 1, the higher the heat retaining temperature becomes, the shorter the critical time for retaining the composite material before molding is set.

3. The method for molding a composite material according to claim 1, the larger the amount of heat the composite material receives on heating up, the shorter the critical time for retaining the composite material before molding is set.

4. The method for molding a composite material according to claim 1, the smaller the drawing ratio of the composite material to be molded becomes on extruding, the shorter the critical time for retaining the composite material before molding is set.

5. The method for molding a composite material according to claim 1, the smaller the content of the liquid crystal resin in the composite material to be molded becomes, the shorter the critical time for retaining the composite material before molding is set.

6. The method for molding a composite material according to claim 1, the lower the glass transition temperature Tg of the matrix resin in the composite material to be molded becomes, the shorter the critical time for retaining the composite material before molding is set.
